(19) Europäisches Patentamt
European Patent Office
Office européen des brevets

(11) **EP 2 539 957 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(51) Int Cl.:
*H01M 10/52* *(2006.01)*    *H02J 7/00* *(2006.01)*
*H01M 10/48* *(2006.01)*    *H01M 10/44* *(2006.01)*
*H01M 10/42* *(2006.01)*

(21) Anmeldenummer: **11700520.7**

(22) Anmeldetag: **04.01.2011**

(86) Internationale Anmeldenummer:
**PCT/EP2011/050060**

(87) Internationale Veröffentlichungsnummer:
**WO 2011/104044 (01.09.2011 Gazette 2011/35)**

(54) **VERFAHREN ZUM AUSBALANCIEREN VON LADEZUSTÄNDEN EINER BATTERIE MIT MEHREREN BATTERIEZELLEN SOWIE EIN ENTSPRECHENDES BATTERIEMANAGEMENTSYSTEM UND EINE BATTERIE**

METHOD FOR BALANCING STATES OF CHARGE OF A BATTERY HAVING A PLURALITY OF BATTERY CELLS AS WELL AS A CORRESPONDING BATTERY MANAGEMENT SYSTEM AND A BATTERY

PROCÉDÉ D'ÉQUILIBRAGE DES ÉTATS DE CHARGE D'UNE BATTERIE COMPORTANT PLUSIEURS ÉLÉMENTS DE BATTERIE, SYSTÈME DE GESTION DE BATTERIE CORRESPONDANT ET BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2010 DE 102010002326**

(43) Veröffentlichungstag der Anmeldung:
**02.01.2013 Patentblatt 2013/01**

(73) Patentinhaber:
• **Samsung SDI Co., Ltd.**
  **Gyeonggi-do (KR)**
• **Robert Bosch GmbH**
  **70442 Stuttgart (DE)**

(72) Erfinder:
• **BOEHM, Andre**
  **70806 Kornwestheim (DE)**
• **BROCHHAUS, Christoph**
  **52072 Aachen (DE)**

(74) Vertreter: **Bee, Joachim et al**
**Robert Bosch GmbH**
**Zentalabteilung Patente**
**Postfach 30 02 20**
**70442 Stuttgart (DE)**

(56) Entgegenhaltungen:
**WO-A2-2008/151659    US-A1- 2006 097 698**
**US-B1- 7 489 106**

**Beschreibung**

Die vorliegende Erfindung betrifft ein Verfahren zum Ausbalancieren von Ladezuständen einer Batterie mit mehreren Batteriezellen, ein Batteriemanagementsystem, welches das erfindungsgemäße Verfahren umfasst, eine Batterie, insbesondere eine Lithium-Ionen-Batterie, mit dem erfindungsgemäßen Batteriemanagementsystem sowie ein Kraftfahrzeug mit der erfindungsgemäßen Batterie. Die Batterie kann insbesondere zum Antrieb des Kraftfahrzeuges eingesetzt werden.

Stand der Technik

Für die Zukunft ist sowohl bei stationären Anwendungen, wie z. B. Windkraftanlagen, Notstromaggregaten oder Inselnetzen, als auch in Fahrzeugen, wie beispielsweise Hybrid- oder reinen Elektrofahrzeugen, zu erwarten, dass vermehrt Batteriesysteme zum Einsatz kommen werden, an die hohe Anforderungen bezüglich nutzbarem Energieinhalt, Lade-Entlade-Wirkungsgrad und Zuverlässigkeit gestellt werden.

Um den Anforderungen hinsichtlich verfügbarem Energieinhalt, maximaler Leistung und Gesamtspannung gerecht zu werden, werden viele einzelne Batteriezellen in Serie und teilweise zusätzlich parallel geschaltet. So werden in Hybrid- und Elektrofahrzeugen Batteriepacks in Li-Ionen oder NiMH-Technologie eingesetzt, die aus einer großen Anzahl in Serie geschalteten elektrochemischen Zellen bestehen.

Eine solche hohe Zahl von in Serie geschalteten Batteriezellen bringt einige Probleme mit sich. Aus Sicherheitsgründen und zur Erzielung einer hinreichenden Genauigkeit bei der Spannungsmessung müssen die Zellspannungen der einzelnen Batteriezellen einzeln gemessen und auf die Einhaltung von Ober- und Untergrenzen hin überprüft werden. Wegen der Serienschaltung der Batteriezellen werden alle Batteriezellen vom gleichen Strom durchflossen, d.h., die Menge der beim Entladen entnommenen bzw. beim Aufladen eingebrachten Ladung ist auch für alle Batteriezellen identisch. Infolgedessen begrenzt die Zelle mit der geringsten Kapazität die Gesamtladung des Packs. Da in der Regel für elektrochemische Zellen ein direkter Zusammenhang zwischen Kapazitätsverlust und Innenwiderstandserhöhung besteht, weist die Zelle mit der geringsten Kapazität i.d.R. auch die geringste Leistung auf. Weicht daher die Kapazität einer Batteriezelle, z. B. durch Alterung, von der einer anderen ab, können die Batteriezellen mit einer höheren Kapazität nur so weit aufgeladen werden, wie die Batteriezelle mit der niedrigsten Kapazität. Außerdem führt der Defekt einer einzelnen Batteriezelle zum Ausfall der gesamten Batterie, weil kein Strom mehr durch die defekte Batteriezelle und damit durch die Batterie fließen kann.

Ein Maß für die in einer Batteriezelle gespeicherte Energiemenge ist der sogenannte Ladezustand oder State-of-Charge (SOC). Dabei ist anzumerken, dass die anfänglichen Ladezustände der Batteriezellen beim Zusammenbau zu einer Batterie nie genau gleich sein werden. Außerdem unterscheiden sich die Batteriezellen aufgrund einer gewissen Produktstreuung bei der Herstellung immer geringfügig in ihren Parametern und somit auch in ihrer Reaktion des Ladezustandes auf einen von außen eingeprägten Strom. Durch Alterung der Batteriezellen können sich diese Unterschiede weiter vergrößern.

Es ist bekannt, ein Batteriemanagementsystem zur Überwachung der Ladezustände einer Batterie einzusetzen. Es soll neben der Sicherheitsüberwachung eine möglichst hohe Lebensdauer der Batterie gewährleisten und sicherstellen, dass die Ladezustände der einzelnen Zellen aufeinander abgestimmt werden. Dies geschieht durch eine geeignete Zellsymmetrisierung, das sogenannte "Cell Balancing". Die Zellsymmetrisierung oder Ausbalancierung der Ladezustände wird in der Regel resistiv vorgenommen. Dazu wird zu jeder Zelle ein Widerstand und ein Schaltelement vorgesehen, um einzelne Zellen gezielt entladen zu können. Aus der DE 10 2006 022 394 A1 ist eine Vorrichtung zum Ladungsabgleich einer Energiequelle mit mehreren Zellen bekannt, bei dem die Zellen mit einer Entladeeinheit zum Ladungsabgleich verbunden sind, die die Zellen wenigstens teilweise entlädt. Nach dem Stand der Technik ist es aber auch möglich, das Zellbalancing kapazitiv - d.h. mit geschalteten Kondensatoren - bzw. induktiv - also mittels geschalteter Induktivitäten - durchzuführen. In diesen beiden Fällen kann Energie zwischen den Zellen mit beschränktem Wirkungsgrad ausgetauscht werden, während die Energie beim resistiven Zellbalancing nur in Wärme umgewandelt werden kann und somit verloren geht.

Für Hybridfahrzeuge ist zu jedem Zeitpunkt eine hohe Leistungsfähigkeit sowohl in Laderichtung zur Rekuperation als auch in Entladerichtung zur Beschleunigung von Vorteil. Es ist bekannt, dass die maximal erlaubte Ladeleistung mit steigendem Ladezustand abnimmt, während die maximal erlaubte Entladeleistung zunimmt. Aus diesem Grund wäre es nach dem Stand der Technik wünschenswert, ein Batteriepack für Hybridfahrzeuge bei einem Ladezustand von 50% zu betreiben. In der Regel wird in der Praxis jedoch ein Betriebsfenster eingesetzt, zum Beispiel zwischen 40% und 60% Ladezustand. Für sogenannte "Plugin-Hybride" ist das Betriebsfenster entsprechend größer, zum Beispiel 10% bis 90% Ladezustand.

Eine gängige Balancing-Strategie versucht einen stets gleichen Ladezustand aller Zellen zu erzielen. Dazu wird i.d.R. auf identische Ruhespannung aller Zellen symmetrisiert. Bei neuwertigen Zellen mit nahezu identischer Kapazität ist diese Strategie gerechtfertigt. Für Zellen unterschiedlicher Kapazität, wie sie sich durch Produktionsstreuungen und Alterung einstellt, führt diese Balancing-Strategie allerdings zu unnötigen Energieverlusten durch das Balancing. US 2006/0097698 A1 und US 7,489,106 B1 zeigen Beispiele für verschiedene Balancing-Strategien des Standes der Techik.

Offenbarung der Erfindung

Erfindungsgemäß wird ein Verfahren zum Ausbalancieren von Ladezuständen einer Batterie mit einer Anzahl von N Batteriezellen vorgestellt, welches zunächst den Schritt der Bestimmung der individuellen Zellenkapazitäten $Cap_n$ aller n=1 bis N Zellen umfasst. Darauf folgt die Bestimmung einer k-ten Zelle mit der kleinsten Zellkapazität $Cap_k$ der n=1 bis N Zellen und die Bestimmung der individuellen Ladzustände $SOC_n$ aller n=1 bis N Zellen. Es folgt die Bestimmung der Entladetiefe $DOD_n$ aller n=1 bis N Zellen. Dies kann bevorzugt gemäß der Gleichung $DOD_n = Cap_n - SOC_n * Cap_n$ geschehen. In einem weiteren Schritt wird dann eine Zielentladetiefe $DOD_{Ziel,n}$ für alle n=1 bis N Zellen bestimmt, mit $DOD_{Ziel,n} = Cap_n/2 + DOD_k - Cap_k/2$. Aus der Zielentladetiefe wird der Zielladezustand $SOC_{Ziel,n}$ für alle n=1 bis N Zellen aus $SOC_{Ziel,n} = 1 - DOD_{Ziel,n}/Cap_n$ bestimmt. Danach wird die Abweichung des Ladezustands $SOC_n$ einer Zelle von ihrem Zielladezustand $SOC_{Ziel,n}$ für alle n=1 bis N Zellen bestimmt, gemäß $\Delta SOC_{Ziel,n} = SOC_n - SOC_{Ziel,n}$. In einem weiteren Schritt wird dann die minimale Abweichung $\Delta SOC_{min}$ aus den Abweichungen $\Delta SOC_{Ziel,n}$ des Ladezustands $SOC_n$ einer Zelle von ihrem Zielladezustand $SOC_{Ziel,n}$ für alle n=1 bis N Zellen aus $\Delta SOC_{min} = min (\Delta SOC_{Ziel,n},\cdots, \Delta SOC_{Ziel,n})$ bestimmt. Es erfolgt dann die Entladung mindestens einer der n=1 bis N Zellen für die gilt $\Delta SOC_{Ziel,n} - \Delta SOC_{min} > X$, wobei X ein Parameter mit $X \geq 0$ ist. Gilt nun für alle der n=1 bis N Zellen $\Delta SOC_{Ziel,n} - \Delta SOC_{min}$ X, dann wird das Verfahren beendet. Gilt dies jedoch nicht, ist also für mindestens eine Zelle $\Delta SOC_{Ziel,n} - \Delta SOC_{min} > X$, dann wird zum Schritt der Bestimmung der individuellen Ladezustände zurückgekehrt und die darauf folgenden Schritte werden wiederholt.

Mit anderen Worten werden die Ladezustände von N individuellen elektrochemischen Batteriezellen einer Batterie ausbalanciert. Das erfindungsgemäße Verfahren mit den Merkmalen des unabhängigen Anspruchs hat den Vorteil, dass die Energieverluste im Rahmen einer Ausbalancierung der Ladezustände gegenüber dem Stand der Technik reduziert werden. Dabei wird gleichzeitig die Leistungsfähigkeit beim Zielladezustand optimiert. Die Dauer der Ausbalancierung wird reduziert. Es muss zur Ausbalancierung keine weitere Hardware eingesetzt werden. Das Verfahren kann als Computerprogramm in Software realisiert werden und ist daher kostengünstig umzusetzen.

Bevorzugt können im Schritt der Entladung alle Zellen mit $\Delta SOC_{Ziel,n} - \Delta SOC_{min} > X$ entladen werden, noch bevorzugter gleichzeitig. Dies verringert die Dauer der Ausbalancierung weiter.

Die Rückkehr zum Schritt der Bestimmung der Ladezustände kann bevorzugt in vordefinierten Zeitabständen vorgenommen werden. Sie kann aber auch kontinuierlich erfolgen.

Bevorzugt wird der Ladezustand in Prozenten angegeben und der Parameter X ist bevorzugt größer Null und kleiner als 6%, noch bevorzugter kleiner als 3%.

Das Verfahren kann vorteilhafterweise auch zum kapazitiven und induktiven Ausbalancieren von Ladezuständen eingesetzt werden. Es umfasst dann ferner nach dem Schritt der Entladung und vor dem Schritt des Zurückkehrens zur Bestimmung der Ladezustände den Schritt der Zuführung des Entladestroms der entladenden Zellen zur Aufladung mindestens einer der n=1 bis N Zellen für die gilt $\Delta SOC_{Ziel,n} - \Delta SOC_{min} < Y$, wobei $X > Y$.

In einem bevorzugten Ausführungsbeispiel werden alle Zellen mit $\Delta SOC_{Ziel,n} - \Delta SOC_{min} < Y$ aufgeladen, noch bevorzugter gleichzeitig.

Entsprechend wird ein Batteriemanagementsystem für eine Batterie, insbesondere eine Li-Ionen Batterie, vorgeschlagen, welches dazu ausgebildet ist, das oben beschriebene erfindungsgemäße Verfahren auszuführen.

Analog wird eine Batterie, insbesondere eine Li-Ionen Batterie, angegeben, mit einem erfindungsgemäßen Batteriemanagementsystem sowie ein Kraftfahrzeug mit einer erfindungsgemäßen Batterie.

Vorteilhafte Weiterbildungen der Erfindung sind in den Unteransprüchen angegeben und in der Beschreibung beschrieben.

Zeichnungen

Ausführungsbeispiele der Erfindung sind in den Zeichnungen dargestellt und in der nachfolgenden Beschreibung näher erläutert.

Es zeigen

Fig. 1 die Entladeleistung und die Ladeleistung einer Batterie des Standes der Technik in Abhängigkeit von dem Ladezustand,

Fig. 2 die Ladezustände einer Batterie des Standes der Technik mit sechs Einzelzellen bei einem Gesamtladezustand der Batterie von 50%,

Fig. 3 die Ladezustände einer Batterie des Standes der Technik mit sechs Einzelzellen bei einem Gesamtladezustand der Batterie von 70%,

Fig. 4 das erfindungsgemäße Verfahren zur Ausbalancierung der Ladezustände von Einzelzellen einer Batterie in einer schematischen Darstellung,

Fig. 5 ein Ergebnis der Ausbalancierung der Batterie aus Fig. 1 mit dem erfindungsgemäßen Verfahren.

Ausführungsformen der Erfindung.

Die vorliegende Erfindung betrifft ein Verfahren zur Ausbalancierung der Ladezustände einzelner Zellen einer Batterie bzw. eines Batteriepacks, insbesondere einer Li-Ionen Batterie bzw. eines Li-Ionen Batteriepacks.

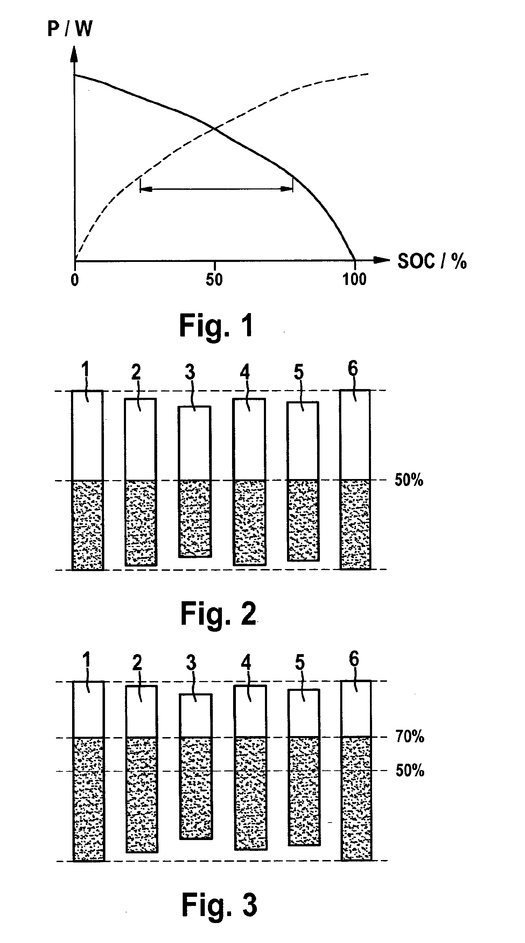

Fig. 1 stellt schematisch den Zusammenhang zwischen Ladezustand und Lade- bzw. Entladeleistung für elektrochemische Zellen dar. In Fig. 1 ist auf der X-Achse der Ladezustand SOC in Prozenten angegeben. Die Y-Achse zeigt die Leistung in Watt. Die gestrichelte Kurve stellt die Entladeleistung, die durchgezogene Kurve die Ladeleistung dar. Der eingezeichnete Bereich stellt den optimalen Betriebsbereich dar. Es ist aus Fig. 1 ersichtlich, dass die maximal erlaubte Ladeleistung mit steigendem Ladezustand abnimmt, während die maximal erlaubte Entladeleistung zunimmt. Aus diesem Grund wird in der Praxis ein Betriebsfenster um den 50% Ladezustandswert eingesetzt.

Eine gängige Balancing-Strategie des Standes der Technik versucht einen stets gleichen Ladezustand aller Zellen zu erzielen. Dazu wird i.d.R. auf identische Ruhespannung aller Zellen symmetrisiert. Bei neuwertigen Zellen mit nahezu identischer Kapazität ist diese Strategie gerechtfertigt. Für Zellen unterschiedlicher Kapazität, wie sie sich durch Produktionsstreuungen und Alterung einstellt, führt diese Balancing-Strategie allerdings zu unnötigen Energieverlusten durch das Balancing. Dies illustrieren die Figuren 2 und 3. Sie zeigen anhand eines Beispiels ein Batteriepack, bestehend aus sechs Einzelzellen, die eine unterschiedliche Kapazität aufweisen. Fig. 2 zeigt die Batteriezellen bei einem Ladezustand von 50%, Fig. 3 bei 70%. Wie in den Figuren ersichtlich ist, haben die sechs Einzelzellen der Batterie alle eine unterschiedliche Kapazität, die durch die dargestellten Kästen symbolisiert werden. Befinden sich alle Zellen bei einem individuellen Ladezustand von 50% (s. Fig. 2), so hat das Gesamtpack ebenfalls einen Ladezustand von 50% und die maximale Leistung ist in Entlade- und Laderichtung verfügbar. Wird das Batteriepack allerdings längere Zeit bei zum Beispiel 70% Ladezustand betrieben, werden alle Zellen auf einen individuellen Ladezustand von 70% balanciert (siehe Fig. 3). Bei Entladung des Packs auf z. B. 50% müssen nach dieser Strategie nun sämtliche Zellen auf 50% balanciert werden, was bedeutet, dass in allen Zellen außer der mit der geringsten Kapazität unnötig Energie vernichtet werden muss. Aus diesem Grund ist diese einfache Balancing-Strategie unzureichend, insbesondere für Hybrid- und Elektrofahrzeuge.

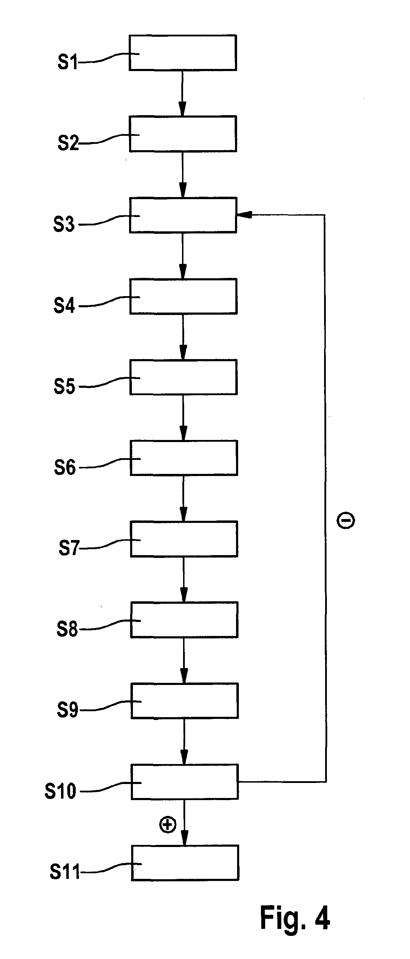

In der Figur 4 ist schematisch ein erfindungsgemäßes Verfahren der Ladezustände von Einzelzellen einer Batterie mit n=1 bis N Zellen gezeigt. Der Kern der Erfindung liegt in der Balancierung sämtlicher Zellen eines Batteriepacks in der Art, dass die Zellen trotz unterschiedlicher Kapazitäten bei einem Ladezustand von 50% des Packs einen individuellen Ladezustand von 50% aufweisen. Bei anderen Ladezuständen ergeben sich je nach Zellkapazität unterschiedliche individuelle Ladezustände, sodass ein geringerer Balancierungsaufwand betrieben werden muss.

Im folgenden Verfahren wird der Ladezustand mit "SOC" (State of Charge) in Prozent angeben, wobei 100% dem Zustand entspricht, im dem die Zelle voll geladen ist. Die Kapazität einer Zelle wird mit "Cap" abgekürzt und im Folgenden in der Einheit "Ah" angeben. Die Entladetiefe wird mit DOD (Depth of Discharge) abgekürzt und ebenfalls in "Ah" angeben. Bei einer Entladetiefe von 0Ah ist die Zelle voll geladen. Die Entladetiefe berechnet sich aus $DOD = (1-SOC)*Cap$. Zur Balancierung sämtlicher N Zellen eines Batteriepacks in der Art, dass sie trotz unterschiedlicher Kapazitäten stets bei 50% Ladezustand des Gesamtbatteriepacks einen individuellen Ladezustand von 50% aufweisen, kann das folgende Verfahren vorteilhaft angewendet werden:

S1     Bestimmung der individuellen Zellenkapazitäten $Cap_n$ aller n=1 bis N Zellen;

S2     Bestimmung einer k-ten Zelle mit einer kleinsten Zellkapazität $Cap_k$ der n=1 bis N Zellen;

S3     Bestimmung der individuellen Ladzustände $SOC_n$ aller n=1 bis N Zellen;

S4     Bestimmung der Entladetiefe $DOD_n$ aller n=1 bis N Zellen; bevorzugt geschieht dies aus:

$$DOD_n = Cap_n - SOC_n * Cap_n;$$

S5     Bestimmung einer Zielentladetiefe $DOD_{Ziel,n}$ für alle n=1 bis N Zellen aus: $DOD_{Ziel,n} = Cap_n/2 + DOD_k - Cap_k/2$;

S6     Bestimmung eines Zielladezustands $SOC_{Ziel,n}$ für alle n=1 bis N Zellen aus:

$$SOC_{Ziel,n} = 1 - DOD_{Ziel,n}/Cap_n;$$

S7     Berechnung der Abweichung des Ladezustands $SOC_n$ einer Zelle von ihrem Zielladezustand $SOC_{Ziel,n}$ für alle n=1 bis N Zellen:

$$\Delta SOC_{Ziel,n} = SOC_n - SOC_{Ziel,n};$$

S8     Berechnung der minimalen Abweichung $\Delta SOC_{min}$ aus den Abweichungen $\Delta SOC_{Ziel,n}$ des Ladezustands $SOC_n$ einer Zelle von ihrem Zielladezustand $SOC_{Ziel,n}$ für alle n=1 bis N Zellen:

$$\Delta SOC_{min} = \min (\Delta SOC_{Ziel,1}, \ldots, \Delta SOC_{Ziel,n});$$

S9     Entladung mindestens einer der n=1 bis N Zellen für die gilt:

$$\Delta SOC_{Ziel,n} - \Delta SOC_{min} > X,$$

    wobei X ein Parameter mit $X \geq 0$ ist;

S10    Wenn für alle der n=1 bis N Zellen $\Delta SOC_{Ziel,n} - \Delta SOC_{min} \leq X$ gilt, dann wird zum nächsten Schritt S11 gesprungen; gilt dies nicht für alle Zellen, dann wird zum Schritt S3 der Bestimmung der individuellen Ladezustände S3 zurückgekehrt und die darauf folgenden Schritte werden wiederholt;

S11    Beendigung des Verfahrens.

Das obige Verfahren bezieht sich dabei zunächst auf das resistive Ausbalancieren von Ladezuständen. Beim resistiven Ausbalancieren können die Zellen lediglich entladen werden, sodass es beim resistiven Ausbalancieren nur auf die Entladung des Schrittes S9 ankommt. In einem anderen Ausführungsbeispiel wird auch das kapazitive oder induktive Ausbalancieren beschrieben werden, bei dem Zellen auch aufgeladen werden können.

Das erfindungsgemäße Verfahren ist in bevorzugter Ausführungsform ein Teil eines Batteriemanagementsystems einer Batterie. Im Folgenden wird daher beispielhaft beschreiben werden, dass das erfindungsgemäße Verfahren durch ein Batteriemanagementsystem ausgeführt wird. Dies geschieht aber nicht beschränkend sondern lediglich beispielhaft.

Die jeweiligen Größen, die für den Verlauf des Verfahrens nötig sind, können im Folgenden mathematisch berechnet oder auf andere Art und Weise, z. B. durch Kennblätter bestimmt oder gemessen werden.

Bevorzugt werden im Schritt S1 die Zellkapazitäten durch ein Batteriemanagementsystem bestimmt bzw. gemessen. Dann wird aus den gewonnenen Daten im nächsten Schritt S2 die Zelle mit der geringsten Zellkapazität bestimmt. Aufgrund der Reihenschaltung der Zellen begrenzt die Zelle mit der geringsten Kapazität die Gesamtladung des Packs. Da in der Regel für elektrochemische Zellen ein direkter Zusammenhang zwischen Kapazitätsverlust und Innenwiderstandserhöhung besteht, weist die Zelle mit der geringsten Kapazität i. d. R. auch die geringste Leistung auf. Daher wird im erfindungsgemäßen Verfahren die Ausbalancierung mit Bezug auf die Kapazität bzw. Entladetiefe der Zelle mit der geringsten Kapazität vorgenommen. Im Schritt S3 wird der Ladezustand jeder einzelnen elektrochemischen Zelle der Batterie bestimmt oder gemessen. Dies geschieht wiederum bevorzugt mit Hilfe des Batteriemanagementsystems. Aus dem individuellen Ladezustand wird dann die Entladetiefe mittels der im Schritt S4 angegebenen Gleichung berechnet oder anderweitig bestimmt oder gemessen. Daraus wird dann im Schritt S5 eine gewünschte Zielentladetiefe für jede Zelle berechnet. Diese Zielentladetiefe wird dabei in Abhängigkeit von der Kapazität und Entladetiefe der Zelle mit der geringsten Kapazität berechnet. Aus der Zielentladetiefe wird dann der Zielladezustand nach der oben im Schritt S6 angegebenen Gleichung berechnet. Für eine Ausbalancierung wird im Schritt S7 die Abweichung des gegenwärtigen Ladezustands vom Zielladezustand $\Delta SOC_{Ziel,n} = SOC_n - SOC_{Ziel,n}$ für jede Zelle bestimmt bzw. berechnet. Es wird daraufhin aus den Abweichungen die minimale Abweichung $\Delta SOC_{min}$ bestimmt (S8). Ist die Differenz aus der Abweichung $\Delta SOC_{Ziel,n} = SOC_n - SOC_{Ziel,n}$ und der minimalen Abweichung $\Delta SOC_{min}$ nun größer als ein Parameter X, der vordefiniert oder wählbar ist, wird mindestens eine derjenigen Zellen, für die dies gilt, entladen (S9). Bevorzugt werden alle Zellen gleichzeitig entladen. Im Schritt S10 wird geprüft, ob tatsächlich eine Zelle entladen wird bzw. zu entladen ist. Wird dies bejaht, wird zum Schritt S3 zurückgesprungen und das Verfahren wird von dort wieder aufgenommen. Ist jedoch keine Zelle mehr zu entladen, wird zum nächsten Schritt gesprungen und das Verfahren beendet (S11).

Der Rücksprung im Schritt S10 kann dabei kontinuierlich erfolgen (wenn die Rechenzeit klein gegenüber dem Entladevorgang ist) oder aber diskret in festen Zeitabständen, z. B. 1-10 Mal pro Sekunde. Je nach Genauigkeit des Verfahrens kann aber auch ein Zeitraum von Minuten sinnvoll sein. Es handelt sich also um ein iteratives Verfahren, bei dem der Parameter X angibt, wie genau auszubalancieren ist. Der Parameter X kann ein Element der reellen oder natürlichen positiven Zahlen inklusive der Null sein. X kann kleiner 10% sein, bevorzugt ist X kleiner als 6%, noch bevorzugter kleiner als 3%. Ein höherer Parameter beschleunigt das Verfahren, macht die Anpassung aber ungenauer. Ein niedriger Parameter führt zu einer niedrigeren Bandbreite der individuellen Ladezustände nach der Ausbalancierung, aber längerer Anpassungsdauer.

Tabelle 1 zeigt ein Ausführungsbeispiel des erfindungsgemäßen Verfahrens für die resistive Ausbalancierung einer Batterie, insbesondere einer Li-Ionen Batterie mit sechs Einzelzellen. Der Parameter X für die Entladung beträgt dabei beispielhaft 4%. Wie aus Tabelle 1 ersichtlich, ist die Zelle 3 die Zelle mit der geringsten Kapazität, hier 4,3 Ah und weist einen Ladezustand von 64% auf. Die sogenannte Zielentladetiefe $DOD_{Ziel}$ der individuellen Zellen ist dann eine Funktion dieser kleinsten Kapazität und der momentanen Ladetiefe der betreffenden Zelle mit minimaler Kapazität. Zelle 5 hat in dem gezeigten Beispiel einen niedrigeren Ladezustand von 60% gegenüber 64% der Zelle 3. Daher weist die Zelle 5 auch den Wert mit der geringsten Abweichung von dem Zielladezustand auf, nämlich eine negative Abweichung von -3%. Da für die Zelle 5 die Differenz der Abweichung vom Zielladezustand vom tatsächlichen Ladezustand und der minimalen Abweichung Null ist, wird diese Zelle nicht entladen. Bei einem Abweichungsschwellenwert X von 4% werden im vorliegenden Beispiel im ersten Schritt die Zellen 1, 2, 4 und 6 entladen. Die weiteren Verläufe des iterativen Verfahrens sind nicht dargestellt.

Tabelle 1: Beispiel 1 für eine Batterie mit 6 Einzelzellen mit X = 4%.

| Zelle | Cap [Ah] | SOC | DOD [Ah] | Min. Cap | $DOD_{Ziel}$ | $SOC_{Ziel}$ | $\Delta SOC_{Ziel}$ | $\Delta SOC_{min}$ | $\Delta SOC_{Ziel} - \Delta SOC_{min}$ | Ausbalancierung |
|---|---|---|---|---|---|---|---|---|---|---|
| 1 | 5,0 | 67% | 1,65 | | 1,90 | 62% | 5% | | 8% | ja |
| 2 | 4,6 | 66% | 1,56 | | 1,70 | 63% | 3% | | 6% | ja |
| 3 | 4,3 | 64% | 1,55 | X | 1,55 | 64% | 0% | | 3% | |
| 4 | 4,7 | 70% | 1,41 | | 1,75 | 63% | 7% | | 11% | ja |
| 5 | 4,5 | 60% | 1,80 | | 1,65 | 63% | -3% | -3% | 0% | |
| 6 | 5,0 | 66% | 1,70 | | 1,90 | 62% | 4% | | 7% | ja |

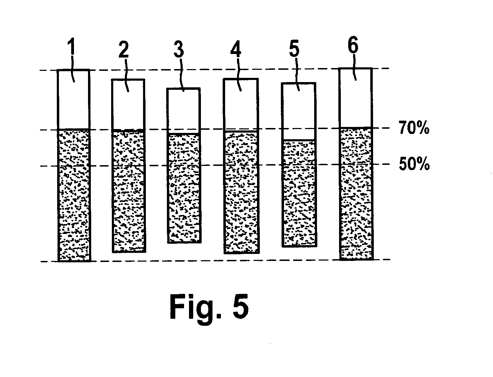

Fig. 5 zeigt schematisch ein Ergebnis des Ausführungsbeispiels der Erfindung der Tabelle 1, also einer durchgeführten Ausbalancierung der Ladezustände der n=1 bis N Einzelzellen der Batterie der Tabelle 1 nach dem erfindungsgemäßen optimierten Verfahren. Wie in der Figur 5 ersichtlich ist, haben die sechs Einzelzellen der Batterie alle eine unterschiedliche Kapazität, die durch den dargestellten Kasten symbolisiert wird. Die Zellen 1 und 6 haben die größte Kapazität, gefolgt von Zelle 4, Zelle 2, Zelle 5 und Zelle 3, in absteigender Rangfolge der individuellen Kapazität. Nach Anwendung des Verfahrens zur Ausbalancierung der Ladezustände der Einzelzelle unterscheiden sich die individuellen Ladezustände der Zellen von dem 70% Gesamtpack-Ladezustand.

Zum Vergleich zeigt die Figur 3 nach Ausbalancierung einer Batterie mit sechs Einzelzellen, dass nach einem Verfahren des Standes der Technik bei einem Gesamtpackladezustand von 70% alle Zellen einen gleichen individuellen Ladezustand aufweisen. Zum Erreichen dieses gleichen Ladezustands ist dabei im Verhältnis zum erfindungsgemäßen Verfahren ein höherer Aufwand von Nöten.

Nach Entladung auf 50% Gesamtpack-Ladezustand würden sämtliche n=1 bis N Zellen hingegen ebenfalls 50% Ladezustand aufweisen, bei entsprechend kleinem Wert des Abweichungsschwellenwertes X. Verändert man in Tabelle 1 den Ladezustand der Zelle mit kleinster Kapazität auf 50%, so beträgt der Zielladezustand für alle Zellen nämlich ebenfalls 50%, wie Tabelle 2 zeigt. Dies folgt daraus, dass die Entladetiefe DOD eine Funktion des Ladezustands SOC ist. Gemäß DOD=(1-SOC)*Cap beträgt für die Zelle k mit geringster Kapazität und einem Ladezustand von 50% die Entladetiefe genau die Hälfte der Kapazität der Zelle, also $DOD_k = Cap_k/2$. Somit gilt dann für die Zielladetiefe jeder weiteren der Zellen $DOD_{Ziel,n} = Cap_n/2$. Die Zielladetiefe hat also den Wert der Hälfte der individuellen Kapazität. Der Zielladezustand beträgt dann also wie gewünscht 50%.

Tabelle 2: Beispiel 1 für eine Batterie mit 6 Einzelzellen mit X = 1%.

| Zelle | Cap [Ah] | SOC | DOD [Ah] | Min. Cap | $DOD_{Ziel}$ | $SOC_{Ziel}$ | $\Delta SOC_{Ziel}$ | $\Delta SOC_{min}$ | $\Delta SOC_{Zeil} - \Delta SOC_{min}$ | Ausbalancierung |
|---|---|---|---|---|---|---|---|---|---|---|
| 1 | 5,0 | 67% | 1,65 | | 2,50 | 50% | 17% | | 17% | ja |
| 2 | 4,6 | 66% | 1,56 | | 2,30 | 50% | 16% | | 16% | ja |
| 3 | 4,3 | 50% | 2,15 | X | 2,15 | 50% | 0% | 0% | 0% | |
| 4 | 4,7 | 70% | 1,41 | | 2,35 | 50% | 20% | | 20% | ja |
| 5 | 4,5 | 60% | 1,80 | | 2,25 | 50% | 10% | | 10% | ja |
| 6 | 5,0 | 66% | 1,70 | | 2,50 | 50% | 16% | | 16% | ja |

In einem weiteren Ausführungsbeispiel wird das Verfahren auch für kapazitives und induktives Ausbalancieren der Ladezustände adaptiert. Dabei wird im Schritt S9 des Verfahrens der Entladestrom der entladenden Zellen zur Aufladung anderer Zellen verwendet. Es wird dann mindestens eine der Zellen für die $\Delta SOC_{Ziel,n} - \Delta SOC_{min} < Y$ gilt aufgeladen, wobei $X > Y$. Bevorzugt werden alle Zellen, für die die Beziehung gilt, zusammen aufgeladen. Der Parameter Y ist in den angegeben Grenzen bezüglich des Parameters X frei wählbar.

Das erfindungsgemäße Verfahren ist bevorzugt als Software in einem Batteriemanagementsystem einer Batterie implementiert. Diese Softwarelösung ermöglicht eine möglichst kostengünstige und flexible Umsetzung des Verfahrens.

Die Batterie mit dem entsprechenden Batteriemanagementsystem kann Teil eines Kraftfahrzeuges sein. Bevorzugt ist sie ein Teil eines Antriebssystems eines Kraftfahrzeuges und mit dem Motor des Kraftfahrzeuges gekoppelt.

## Patentansprüche

1.  Verfahren zum Ausbalancieren von Ladezuständen einer Batterie mit einer Anzahl von N Batteriezellen, umfassend die Schritte:

    (S1) Bestimmung der individuellen Zellenkapazitäten ($Cap_n$) aller n=1 bis N Zellen;
    (S2) Bestimmung einer k-ten Zelle mit einer kleinsten Zellkapazität ($Cap_k$) der n=1 bis N Zellen;
    (S3) Bestimmung der individuellen Ladzustände ($SOC_n$) aller n=1 bis N Zellen;
    (S4) Bestimmung der Entladetiefe ($DOD_n$) aller n=1 bis N Zellen;
    (S5) Bestimmung einer Zielentladetiefe ($DOD_{Ziel,n}$) für alle n=1 bis N Zellen aus:

$$DOD_{Ziel,n} = Cap_n/2 + DOD_k - Cap_k/2;$$

    (S6) Bestimmung eines Zielladezustands ($SOC_{Ziel,n}$) für alle n=1 bis N Zellen aus:

$$SOC_{Ziel,n} = 1 - DOD_{Ziel,n}/Cap_n;$$

    (S7) Bestimmung der Abweichung des Ladezustands ($SOC_n$) einer Zelle von ihrem Zielladezustand ($SOC_{Ziel,n}$) für alle n=1 bis N Zellen:

$$\Delta SOC_{Ziel,n} = SOC_n - SOC_{Ziel,n};$$

    (S8) Bestimmung der minimalen Abweichung ($\Delta SOC_{min}$) aus den Abweichungen ($\Delta SOC_{Ziel,n}$) des Ladezustands ($SOC_n$) einer Zelle von ihrem Zielladezustand ($SOC_{Ziel,n}$) für alle n=1 bis N Zellen:

$$\Delta SOC_{min} = min (\Delta SOC_{Ziel,1}, ..., \Delta SOC_{Ziel,n});$$

    (S9) Entladung mindestens einer der n=1 bis N Zellen für die gilt:

$$\Delta SOC_{Ziel,n} - \Delta SOC_{min} > X,$$

    wobei X ein Parameter mit $X \geq 0$ ist;
    (S10) Wenn für alle der n=1 bis N Zellen $\Delta SOC_{Ziel,n} - \Delta SOC_{min} \leq X$ gilt, dann wird zum nächsten Schritt gesprungen (S11); gilt dies nicht für alle Zellen, dann wird zum Schritt (S3) der Bestimmung der individuellen Ladezustände (S3) zurückgekehrt und die darauf folgenden Schritte werden wiederholt;
    (S11) Beendigung des Verfahrens.

2.  Verfahren nach Anspruch 1, wobei im Schritt der Entladung alle Zellen mit $\Delta SOC_{Ziel,n} - \Delta SOC_{min} \geq X$ entladen werden.

3.  Verfahren nach Anspruch 1 oder 2, wobei die Rückkehr zum Schritt der Bestimmung der individuellen Ladezustände (S3) in vordefinierten Zeitabständen vorgenommen wird.

4. Verfahren nach Anspruch 1 oder 2, wobei die Rückkehr zum Schritt der Bestimmung der individuellen Ladezustände (S3) kontinuierlich vorgenommen wird.

5. Verfahren nach einem der vorhergehenden Ansprüche, wobei der Ladezustand (SOC) in Prozenten angegeben ist und der Parameter X größer Null und kleiner als 6%, bevorzugt kleiner als 3% ist.

6. Verfahren nach einem der vorhergehenden Ansprüche, wobei zum kapazitiven und induktiven Ausbalancieren von Ladezuständen der Schritt der Entladung (S9) ferner umfasst:

Zuführung des Entladestroms der entladenden Zellen zur Aufladung mindestens einer der n=1 bis N Zellen für die gilt: $\Delta SOC_{Ziel,n} - \Delta SOC_{min} < Y$, wobei X > Y.

7. Verfahren nach Anspruch 6, wobei alle Zellen mit $\Delta SOC_{Ziel,n} - \Delta SOC_{min} < Y$ gleichzeitig aufgeladen werden.

8. Batteriemanagementsystem für eine Batterie, welches dazu ausgebildet ist, das Verfahren nach einem der Ansprüche 1 bis 7 auszuführen.

9. Batterie, insbesondere eine Li-Ionen Batterie, mit einem Batteriemanagementsystem nach Anspruch 8.

10. Kraftfahrzeug mit einer Batterie nach Anspruch 9.

**Claims**

1. Method for balancing states of charge of a battery having a number of N battery cells, comprising the steps:

(S1) Determination of the individual cell capacities ($Cap_n$) of all the n=1 to N cells;
(S2) Determination of a k-th cell with the smallest cell capacity ($Cap_k$) of the n=1 to N cells;
(S3) Determination of the individual states of charge ($SOC_n$) of all the n=1 to N cells;
(S4) Determination of the depth of discharge ($DOD_n$) of all the n=1 to N cells;
(S5) Determination of the target depth of discharge ($DOD_{Target,n}$) for all the n=1 to N cells from: $DOD_{Target,n} = Cap_n/2 + DOD_k - Cap_k/2$;
(S6) Determination of a target state of charge ($SOC_{Target,n}$) for all the n=1 to N cells from: $SOC_{Target,n} = 1 - DOD_{Target,n}/Cap_n$;
(S7) Determination of the deviation of the state of charge ($SOC_n$) of a cell from its target state of charge ($SOC_{Target,n}$) for all the n=1 to N cells:

$$\Delta SOC_{Target,n} = SOC_n - SOC_{Target,n};$$

(S8) Determination of the minimum deviation ($\Delta SOC_{min}$) from the deviations ($\Delta SOC_{Target,n}$) of the state of charge ($SOC_n$) of a cell from its target state of charge ($SOC_{Target,n}$) for all the n=1 to N cells:

$$\Delta SOC_{min} = min \ (\Delta SOC_{Target,1}, \ldots, \Delta SOC_{Target,n});$$

(S9) Discharging of at least one of the n=1 to N cells for which the following applies:

$$\Delta SOC_{Target,n} - \Delta SOC_{min} > X,$$

where X is a parameter for which $X \geq 0$;
(S10) If $\Delta SOC_{Target,n} - \Delta SOC_{min} \leq X$ applies to all of the n=1 to N cells, the process jumps to the next step (S11); if this does not apply to all the cells, the process returns to the step (S3) of the determination of the individual states of charge (S3) and the following steps are repeated;

(S11) Ending of the method.

2. Method according to Claim 1, wherein in the discharging step, all the cells for which $\Delta SOC_{Target,n} - \Delta SOC_{min} \geq X$ applies are discharged.

3. Method according to Claim 1 or 2, wherein the return to the step of determining the individual states of charge (S3) is performed at predefined time intervals.

4. Method according to Claim 1 or 2, wherein the return to the step of determining the individual states of charge (S3) is performed continuously.

5. Method according to one of the preceding claims, wherein the state of charge (SOC) is specified in percentages and the parameter X is greater than zero and smaller than 6%, preferably smaller than 3%.

6. Method according to one of the preceding claims, wherein, in order to balance states of charge capacitively and inductively, the discharging step (S9) also comprises:

feeding in the discharge current of the discharged cells in order to charge at least one of the n=1 to N cells for which the following applies: $\Delta SOC_{Target,n} - \Delta SOC_{min} < Y$, where X > Y.

7. Method according to Claim 6, wherein all the cells for which $\Delta SOC_{Target,n} - \Delta SOC_{min} < Y$ applies are charged simultaneously.

8. Battery management system for a battery which is configured to carry out the method according to one of Claims 1 to 7.

9. Battery, in particular an Li-ion battery, having a battery management system according to Claim 8.

10. Motor vehicle having a battery according to Claim 9.

**Revendications**

1. Procédé d'équilibrage des états de charge d'une batterie avec un nombre N de cellules de batterie, comprenant les étapes suivantes :

(S1) détermination des capacités de cellule (Cap$_n$) individuelles de toutes les cellules n=1 à N ;
(S2) détermination d'une k$^{ième}$ cellule avec une capacité de cellule (Cap$_k$) inférieure aux cellules n=1 à N ;
(S3) détermination des états de charge (SOC$_n$) individuels de toutes les cellules n=1 à N ;
(S4) détermination du taux de décharge (DOD$_n$) de toutes les cellules n=1 à N ;
(S5) détermination d'un taux de décharge cible (DOD$_{Ziel,n}$) pour toutes les cellules n=1 à N à partir de la formule :

$$DOD_{Ziel,n} = Cap_n/2 + DOD_k - Cap_k/2 ;$$

(S6) détermination d'un état de charge cible (SOC$_{Ziel,n}$) pour toutes les cellules n=1 à N à partir de la formule :

$$SOC_{Ziel,n} = 1 - DOD_{Ziel,n}/Cap_n ;$$

(S7) détermination de l'écart entre l'état de charge (SOC$_n$) d'une cellule par rapport à son état de charge cible (SOC$_{Ziel,n}$) pour toutes les cellules n=1 à N :

$$\Delta SOC_{Ziel,n} = SOC_n - SOC_{Ziel,n} ;$$

(S8) détermination de l'écart minimal ($\Delta SOC_{min}$) à partir des écarts ($\Delta SOC_{Ziel,n}$) de l'état de charge (SOC$_n$) d'une cellule par rapport à son état de charge cible (SOC$_{Ziel,n}$) pour toutes les cellules n=1 à N :

$$\Delta SOC_{min} = min\ (\Delta SOC_{Ziel,1,\ …,}\ \Delta SOC_{Ziel,n})\ ;$$

(S9) décharge d'au moins une des cellules n=1 à N pour laquelle prévalut :

$$\Delta SOC_{Ziel,n} - \Delta SOC_{min} > X,$$

où X et un paramètre, avec $X \geq 0$ ;

(S10) lorsque pour toutes les cellules n=1 à N on a $\Delta SOC_{Ziel,n} - \Delta SOC_{min} \leq X$, alors on passe à l'étape (S11) suivante ; si ce n'est pas le cas pour toutes les cellules, alors on revient à l'étape (S3) de détermination des états de charge (S3) individuels et les étapes suivantes sont répétées ;

(S11) fin du procédé.

2. Procédé selon la revendication 1, toutes les cellules avec $\Delta SOC_{Ziel,n} - \Delta SOC_{min} \geq X$ étant déchargées à l'étape de décharge.

3. Procédé selon la revendication 1 ou 2, le retour à l'étape de détermination des états de charge individuels (S3) s'effectuant à intervalles prédéfinis.

4. Procédé selon la revendication 1 ou 2, le retour à l'étape de détermination des états de charge individuels (S3) s'effectuant en continu.

5. Procédé selon l'une quelconque des revendications précédentes, l'état de charge (SOC) étant indiqué en pour cent et le paramètre X étant supérieur à zéro et inférieur à 6 %, de façon préférée inférieur à 3 %.

6. Procédé selon l'une quelconque des revendications précédentes, l'équilibrage capacitif et inductif des états de charge de l'étape de décharge (S9) comprenant en outre :

amenée du courant de décharge des cellules se déchargeant afin de charger au moins une cellule n=1 à N pour laquelle vaut :

$$\Delta SOC_{Ziel,n} - \Delta SOC_{min} < Y,\ où\ X > Y.$$

7. Procédé selon la revendication 6, toutes les cellules avec $\Delta SOC_{Ziel,n} - \Delta SOC_{min} < Y$ étant chargées simultanément.

8. Système de gestion de batterie pour une batterie, réalisé pour mettre en oeuvre le procédé selon l'une quelconque des revendications 1 à 7.

9. Batterie, notamment batterie Li-ions, avec un système de gestion de batterie selon la revendication 8.

10. Véhicule automobile équipé d'une batterie selon la revendication 9.

## Fig. 1

## Fig. 2

## Fig. 3

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006022394 A1
- US 20060097698 A1
- US 7489106 B1